# EUROPEAN PATENT APPLICATION

(11) **EP 3 266 987 A1**
(43) Date of publication of application: **10.01.2018**
(21) Application number: 16290133.4
(22) Date of filing: 08.07.2016
(51) Int. Cl.: F01D 17/08, F02C 9/28, F01D 21/12

(54) **TURBINE SPEED AND ACCELERATION LIMITER**

(71) Applicant: General Electric Technology GmbH, 5400 Baden (CH)
(72) Inventor: Soriano, Rémi, 92300 Levallois-Perret (FR); Callier, Xavier, 92300 Levallois-Perret (FR); Labrunie, Jean-Luc, 92300 Levallois-Perret (FR)
(74) Representative: General Electric Technology GmbH

(57) **Abstract**

Method for controlling steam admission into a steam turbine (1), the turbine (1) comprising a high pressure casing (2), at least one reduced pressure casing (3, 4, 5, 6) and an admission steam control system (13), the high pressure casing (2) and at least one reduced pressure casing (3) comprising control valves (8, 10) for steam admission.

The steam admission control system (13) manages the following steps: determining at least one of the speed (14) and the acceleration (15) of the turbine (1); comparing the determined speed and/or acceleration respectively with a predefined speed threshold value (16) and a predefined acceleration threshold value (17); when the determined speed and/or acceleration are superior to the predefined threshold value (18, 19), the control system (13) activates a speed and acceleration limiter (20).

## Description

The present invention generally relates to power plant steam turbines and more particularly to a method for controlling steam admission into such a steam turbine.

Typically, a power plant steam turbine is a device which converts thermal energy of pressurized steam to mechanical energy. The thermal energy is obtained by the production of steam by a boiler. The resulting steam flow is thus supplied to the steam turbine at the required pressure and temperature.

The turbine converts the steam flow into a torque which is used for driving a rotor of an electric generator for the production of electrical energy. Particularly, the rotor of the electric generator is driven by means of a turbine shaft that interconnects the rotor with the steam turbine.

Commonly, the electric generator is coupled with an alternating current electrical grid for distributing the produced electrical energy to the consumers through a plurality of transmission lines. In order to obtain a delivery of electrical energy from the electric generator to the electrical grid, it is important that the electrical generator and the electrical grid are synchronized such that the frequency of the electrical generator matches the frequency of the electrical grid.

The steam, supplied by the boiler, enters a high pressure steam casing. The admission in the high pressure casing is done through stop valves and control valves.

After steam expansion in the high pressure casing, the steam is sent to moisture-separator reheaters pulling moisture and reheating the steam for preventing corrosion and erosion.

The dried and reheated steam is thus admitted in a reduced pressure casing, which is generally an intermediate pressure steam casing, through intermediate pressure stop and control valves, and then admitted in one or more low pressure steam casings. Certain steam turbines are not provided with intermediate pressure casing and the steam passes directly from the moisture-separator reheaters to the low pressure casings through low pressure stop and control valves.

In case of a transient, such as a switch to house load turbine operating mode, a switch to load rejection or when a grid short circuit occurs, the resistive torque applied by the electric generator decreases or disappears and the steam flow passing through the turbine leads to an acceleration of the turbine.

The turbine overspeed trip caused by the torque unbalance between the thermal power and the electrical load can lead to mechanical constraints on the shaft line and to an unavailability of the turbine-generator group.

In the state of the art, solutions consists in keeping the intermediate pressure admission valves, or low pressure admission valves if there is no intermediate pressure casing, open from turbine start-up from a load between 5 to 40 % of the nominal load. Predefined load profiles are used to reduce instability. Nevertheless, only a limited number of profiles to characterize the transient are defined. The torque unbalance transients are often sudden, unpredictable and their magnitudes and profiles are difficult to characterize. Consequently, this solution does not allow to respond to all type of transient.

Another solution consists in sending closing and re-opening orders to the control valves. However, the disadvantage of this solution lies on the time to recover as well as the control valves stress.

Furthermore, these solutions are not appropriate or sufficient for turbines with large dead volumes downstream intermediate pressure valves, especially between moisture-separator reheaters and intermediate pressure casing, and between intermediate pressure casing and low pressure casing.

Consequently, the present invention intends to overcome these disadvantages by providing a method for controlling admission steam into power plant steam turbine, the method being able to prevent an excessive speed and/or acceleration of the turbine which may lead to the turbine unavailability for the grid.

The present invention thus proposes a method for controlling steam admission into a steam turbine, the turbine comprising a high pressure casing, at least one reduced pressure casing and an admission steam control system, the high pressure casing and at least one reduced pressure casing comprising control valves for steam admission.

The steam admission control system manages the following steps: determining at least one of the speed and the acceleration of the turbine; comparing the determined speed and/or acceleration respectively with a predefined speed threshold value and a predefined acceleration threshold value; when the determined speed and/or acceleration are superior to the predefined threshold value, the control system activates a speed and acceleration limiter.

Advantageously, the activated speed and acceleration limiter may impose control valve opening setpoints, depending on the determined speed and/or acceleration values, to the high pressure and reduced pressure control valves in order to regulate the steam admission into the turbine. The speed and acceleration limiter can act by a fast and appropriate response.

More advantageously, the step of imposing control valve opening setpoints to the control valves may be performed through control valve position-loop cards.

Besides, the control valve opening setpoints may depend on the turbine steam flow demand.

Preferably, the steam flow demand is determined using parameters including at least one of the rotating speed of the turbine, the load, the live steam pressure and the turbine operating mode.

In another embodiment, the speed threshold value may be chosen according to the turbine nominal speed.

Advantageously, the acceleration threshold value may be chosen according to the turbine maximum acceleration.

More advantageously, the speed and acceleration limiter is deactivated when the turbine speed and acceleration drop below the threshold value since the situation is normalized.

Besides, the control system may be activated during a transient of the turbine during which an excessive speed and/or acceleration are the most likely to occur.

Another object of the invention relates to a steam turbine comprising a high pressure casing, at least one reduced pressure casing and a steam admission control system, the high pressure casing and at least one reduced pressure casing comprising control valves for steam admission.

Besides, the steam admission control system is configured to determine at least one of the speed and the acceleration of the turbine, compare the determined speed and/or acceleration respectively with a predefined speed threshold value and a predefined acceleration threshold value, and activate a speed and acceleration limiter when the determined speed and/or acceleration are superior to the threshold value

Preferably, hydraulic actuators are provided to perform the opening and closing of the control valves, the hydraulic actuators comprising an electro-hydraulic amplifier.

More preferably, hydraulic actuators are provided to perform the opening and the closing of the control valves, the hydraulic actuators comprising a hydraulic fast closing device for emergency closing of the associated control valves.

Other advantages and features of the invention will appear from the detailed description of an embodiment of the invention, which is a non limiting example, illustrated on the appended drawings of which:
- Figure 1 is a schematic view of a power plant steam turbine for use in a method according to an embodiment of the invention; and
- Figure 2 illustrates the steps performed by a steam admission control system of the steam turbine of figure 1.

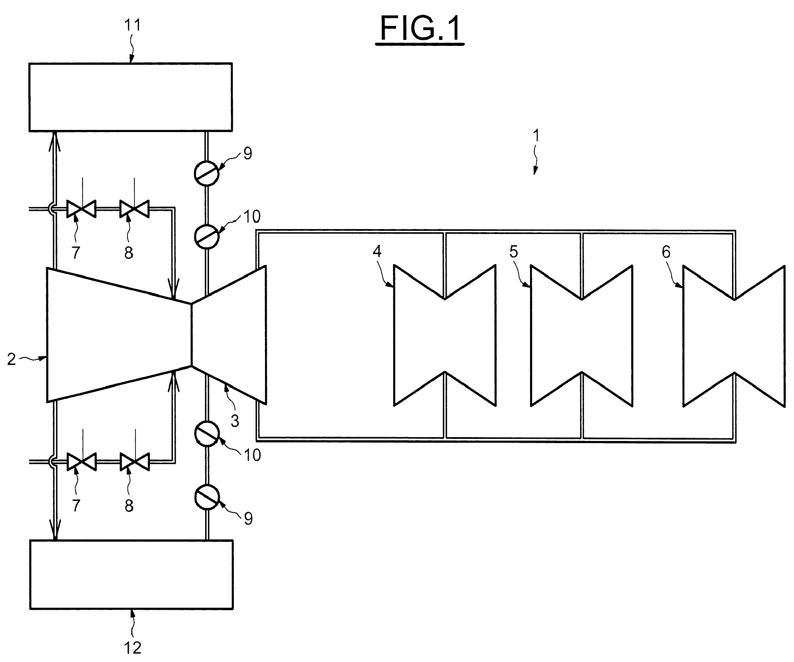

As shown on Figure 1, a power plant steam turbine 1 comprises a high pressure steam casing 2 and at least on reduced pressure casings. In the illustrated example, the reduced pressure casings correspond to an intermediate steam casing 3 and three low pressure steam casings 4, 5 and 6.

The steam turbine is also provided with stop valves 7 and control valves 8 upstream of the high pressure casing 2, and stop valves 9 and control valves 10 upstream of the intermediate pressure casing 3.

Two moisture-separator reheaters 11 and 12 are located upstream of the intermediate pressure stop valves 9 and control valves 10.

The steam, supplied by a boiler (not shown here), enters the high pressure steam casing 2. The admission in the high pressure casing is done through high pressure stop valves 7 and high pressure control valves 8.

After steam expansion in the high pressure casing 2, the steam is sent to moisture-separator reheaters 11 and 12.

The steam is thus admitted in the intermediate pressure casing 3, through the intermediate pressure stop valves 9 and the intermediate pressure control valves 10, and then admitted in the low pressure casings 4, 5 and 6.

Furthermore, the steam turbine 1 comprises a steam admission control system 13 which, when the turbine is running and advantageously when a transient occurs, is activated.

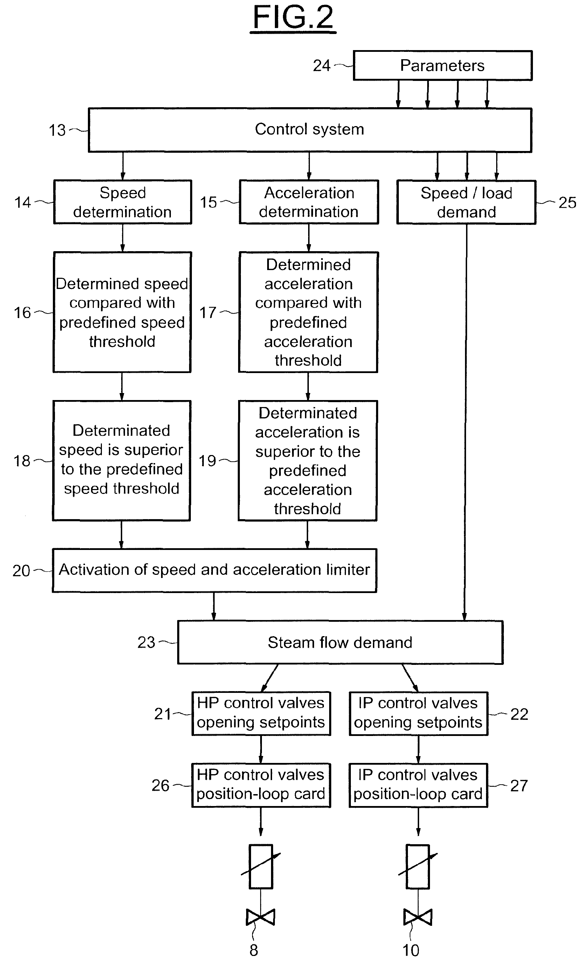

As illustrated in figure 2, in a first step, the control system 13 determines one or both of the turbine speed 14 and the turbine acceleration 15.

In a second step, the control system 13 compares the determined speed with a predefined speed threshold value 16 and compares the determined acceleration with a predefined acceleration threshold value 17.

When the determined speed is superior to the predefined speed threshold value 18 and/or the determined acceleration is superior to the predefined acceleration threshold value 19, the control system 13 activates a speed and acceleration limiter 20.

In order to regulate the steam admission into the turbine 1 and drop the speed and/or acceleration below the threshold values, the activated speed and acceleration limiter 20 imposes advantageously control valves opening setpoints 21, 22 to the high pressure control valves 8 and to the reduced pressure control valves which are, in that example, the intermediate pressure control valves 10. The control valves opening setpoints 21, 22 are preferably elaborated depending on the turbine steam flow demand 23.

In this regard, the control system 13 may determine a steam flow demand 23 in function of various turbine parameters 24 and the determined speed and/or acceleration values. The parameters 24 may include, for example, the rotating speed of the turbine, the load, the live steam pressure, the turbine operating mode, limitations and runbacks, and allows the determination of a speed and/or load demand.

In the illustrated embodiment, the steam admission control system 13 comprises one position-loop card per control valve. The position-loop cards 26 for the high pressure control valves 8 and the position-loop cards 27 for the intermediate pressure control valves 10 are respectively configured to perform the steps of imposing the opening setpoint 21 to the high pressure control valves 8 and imposing the opening setpoint 22 to the intermediate pressure control valves 10.

Moreover, the opening and closing of the control valves 8, 10 are preferably performed by hydraulic actuators comprising an electro-hydraulic amplifier for the control of the valves and a hydraulic fast closing device for emergency closing of the valves 8, 10. Then the turbine may be configured to close the control valves 8, 10 either by the electro-hydraulic amplifier or the hydraulic fast closing device.

In normal operation, the speed and acceleration limiter 20 is preferably deactivated, and the control valves 8, 10 positions may be determined by the steam flow demand 23, itself determined by the parameters 24.

In contrast, during a transient such as a load variation, a grid fault or a switch to house load operating mode, leading to a torque unbalance between the electrical load and the thermal power, the turbine 1 generally accelerates and its speed increases. The speed and acceleration limiter 20 is only activated if the speed and/or acceleration values exceed the predefined speed and acceleration threshold values. As a response, the speed and acceleration limiter 20 limits the speed and acceleration advantageously by imposing control valves opening setpoints 21, 22 and thus quickly closing the high pressure control valves 8 and the intermediate pressure control valves 10.

The speed and acceleration limiter 20 may be configured to derivate the speed continuously in order to calculate the corresponding acceleration and compares the obtained value with the predefined threshold value. Typically, the acceleration predefined threshold value is around 50% of the turbine maximum acceleration. Thus, the speed and acceleration limiter 20 decreases the steam flow demand 23 according to the deviation between the determined acceleration and the acceleration threshold value.

Furthermore, the speed and acceleration limiter 20 compares the turbine speed with the speed threshold value. Typically, the speed threshold value is 107% of the turbine nominal speed. Thus, the speed and acceleration limiter 20 decreases the steam flow demand 23 according to the deviation between the determined speed and the speed threshold value.

Once the situation is normalized, the speed and acceleration values dropped below the speed and acceleration threshold. Thus the speed and acceleration limiter 20 may be deactivated and thus no longer control the high pressure control valves 8 and the intermediate pressure control valves 10.

Hence, the present invention provides a method allowing regulation of the steam supplied to the high pressure, intermediate pressure and low pressure casings 2, 3, 4, 5, 6, and thus avoiding an excessive speed of the turbine 1 which could lead to the turbine unavailability for the grid.

The method allows ensuring the safety of the shaft line of the turbine 1 by controlling the shaft-line speed, the load of the turbogenerator and the live steam pressure by a fast and appropriate response.

The speed and acceleration limiter 20 realizes a realistic analysis by checking the speed variations, that is to say the result of the unbalance between the power and the load. This improves the availability of the turbine 1 by making the corrective actions on the result rather than a prediction.

## Claims

1. Method for controlling steam admission into a steam turbine (1), the turbine (1) comprising a high pressure casing (2), at least one reduced pressure casing (3, 4, 5, 6) and an admission steam control system (13), the high pressure casing (2) and at least one reduced pressure casing (3) comprising control valves (8, 10) for steam admission, **characterized in that** the steam admission control system (13) manages the following steps:
determining at least one of the speed (14) and the acceleration (15) of the turbine (1);
comparing the determined speed and/or acceleration respectively with a predefined speed threshold value (16) and a predefined acceleration threshold value (17);
when the determined speed and/or acceleration are superior to the predefined threshold value (18, 19), the control system (13) activates a speed and acceleration limiter (20).

2. Method according to claim 1, wherein the activated speed and acceleration limiter (20) imposes control valve opening setpoints (21, 22), depending on the determined speed and/or acceleration values, to the high pressure and reduced pressure control valves (8, 10) in order to regulate the steam admission into the turbine (1).

3. Method according to claim 2, wherein the control valve opening setpoints (21, 22) depend on the turbine (1) steam flow demand (23).

4. Method according to claim 3, wherein, the steam flow demand (23) is determined using parameters (24) including at least one of the rotating speed of the turbine (1), the load, the live steam pressure and the turbine (1) operating mode.

5. Method according to claim 2, wherein the step of imposing control valve opening setpoints (21, 22) to the control valves (8, 10) is performed through control valve position-loop cards (26, 27).

6. Method according to any preceding claim, wherein the speed threshold value is chosen according to the turbine (1) nominal speed.

7. Method according to any preceding claim, wherein the acceleration threshold value is chosen according to the turbine (1) maximum acceleration.

8. Method according to any preceding claim, wherein the speed and acceleration limiter (20) is deactivated when the turbine (1) speed and acceleration drop below the threshold value.

9. Method according to any preceding claim, wherein the control system (13) is activated during a transient of the turbine (1).

10. Steam turbine comprising a high pressure casing (2), at least one reduced pressure casing (3, 4, 5, 6) and a steam admission control system (13), the high pressure casing (2) and at least one reduced pressure casing (3) comprising control valves (8, 10) for steam admission, **characterized in that** the steam admission control system (13) is configured to determine at least one of the speed (14) and the acceleration (15) of the turbine (1), compare the determined speed and/or acceleration respectively with a predefined speed threshold value (16) and a predefined acceleration threshold value (17), and activate a speed and acceleration limiter (20) when the determined speed and/or acceleration are superior to the threshold value (18, 19).

11. Steam turbine according to claim 10, wherein hydraulic actuators are provided to perform the opening and closing of the control valves (8, 10), the hydraulic actuators comprising an electro-hydraulic amplifier.

12. Steam turbine according to claim 10 or 11, wherein hydraulic actuators are provided to perform the opening and the closing of the control valves (8, 10), the hydraulic actuators comprising a hydraulic fast closing device for emergency closing of the associated control valves.
